Europäisches Patentamt

European Patent Office

Office européen des brevets

(11) Publication number: **0 481 615 A2**

## EUROPEAN PATENT APPLICATION

(21) Application number: **91308797.9**

(22) Date of filing: **26.09.91**

(51) Int. Cl.5: **G06F 9/45**

(30) Priority: **15.10.90 IL 95996**

(43) Date of publication of application:
**22.04.92 Bulletin 92/17**

(84) Designated Contracting States:
**DE FR GB**

(71) Applicant: **International Business Machines
Corporation
Old Orchard Road
Armonk, N.Y. 10504(US)**

(72) Inventor: **Rodeh, Michael
Moshav Ben Ami
DN Oshrat 25240(IL)**
Inventor: **Bernstein, David
73 Shvaicher Street
Haifa 34995(IL)**

(74) Representative: **Killgren, Neil Arthur
IBM United Kingdom Limited Intellectual
Property Department Hursley Park
Winchester Hampshire SO21 2JN(GB)**

(54) Global instruction scheduler for a computer.

(57) A scheduler provides for global (intra-loop) scheduling of instructions to enable better utilisation of machine resources, in particular for a range of superscalar processors. The scheduler uses control and data dependence information, which is summarised in a program dependence graph, to move instructions well beyond basic block boundaries. The scheduler can be tuned to schedule instructions for a range of superscalar machines through the use of a parametric machine description for the range of machines and a sets of heuristics for specific machines. The scheduler allows for the scheduling of both 'useful' and 'speculative' instructions.

FIG. 1

EP 0 481 615 A2

The present invention relates to an instruction scheduler for a computer and in particular to an instruction scheduler which enables the scheduling of instructions beyond basic block boundaries (i.e. global scheduling) in a manner suitable for use with a parallel/pipelined computer.

Instruction scheduling is a process of rearranging or transforming program statements before execution by a processor in order to reduce possible run-time delays between compiled instructions. Instruction scheduling is usually performed at an intermediate language or assembly code level. Such transformations must preserve data dependences and are subject to other constraints. This can be particularly advantageous when compiling for pipelined machine architectures, which allow increased throughput by overlapping instruction execution. For example, if there is a delay of one cycle between fetching and using a value V, it would be desirable to "cover" this delay with an instruction that is independent of V and is "ready" to be executed.

A particular application for instruction scheduling is in the field of so-called Reduced Instruction Set Computers (RISC). An introduction to RISC computers can be found in the following article:

R1    D.A. Patterson, D.A., "Reduced instruction set computers", published in the Communications of the ACM (Jan. 1985) at pages 8-21.

The RISC approach to building high speed processors, which emerged in the late seventies, emphasises the need for the streamlining of program instructions. As a result, instructions have to be rearranged, usually at the intermediate language or assembly code level, to take full advantage of pipelining and thereby to improve performance. The burden of the instruction scheduling, is placed on optimising compilers that generate code for RISC processors. Usually, the compilers perform instruction scheduling at the basic block level, solving most of the problems posed by the pipelined structure of RISC processors.

An approach to scheduling at the instruction level for processors with several functional units is described in the following article:

R2    D. Bernstein, J.M. Jaffe and M. Rodeh, entitled "Scheduling Arithmetic and Load Operations in Parallel with no Spilling", published in the SIAM Journal of Computing in Dec. 1989.

Approaches to scheduling at the instruction level for pipelined machines are described in a number of articles listed below:

R3    D. Bernstein and I. Gertner, "Scheduling Expressions on a Pipelined Processor with a Maximal Delay of one Cycle", published in the ACM Transactions on Programming Languages and Systems, Vol. 11, No. 1 (Jan. 1989) at pages 57-66;

R4    D. Bernstein, M. Rodeh and I. Gertner, "Approximation Algorithms for Scheduling Arithmetic Expressions on Pipelined Machines", published in the Journal of Algorithms, 10 (Mar. 1989) at pages 120-139.

R5    J.J. Hennessy and T. Gross, "Postpass Code Optimisation of Pipeline Constraints", published in the ACM Transactions on Programming Languages and Systems 5 (July 1983) at pages 422-448.

R6    P.B. Gibbons and S.S. Muchnick, "Efficient Instruction Scheduling for a Pipelined Architecture", published in the Proceedings of the ACM Symposium on Compiler Construction (June 1986)

R7    H. Warren, "Instruction Scheduling for the IBM RISC System/6000 Processor", published in the IBM Journal of Research and Development Vol. 34, No 1 Jan 1990 at pages 85-92.

An approach to scheduling at the instruction level for Very Long Instruction Word (VLIW) machines (i.e. machines where several conventional instructions for respective parts of a machine are combined) is described in the following thesis:

R8    J.R. Ellis, "Bulldog: A compiler for VLIW architectures", Ph.D. thesis, Yale U/DCS/RR-364, Yale University, Feb. 1985.

Whereas for machines with n functional units the idea is to be able to execute as many as n instructions each cycle, for pipelined machines the goal is to issue a new instruction every cycle, effectively eliminating the so-called NOPs (No OPerations). However, for both types of machines, the common feature required from the compiler is to discover in the code instructions that are data independent, allowing the generation of code that better utilises the machine resources.

It was a common view that such data independent instructions can be found within basic blocks, and that there is no need to move instructions beyond basic block boundaries. A basic block is a sequence of consecutive instructions for which the flow of control enters at the beginning of the sequence and exits at the end thereof without a wait or branch possibility, except at the point of exit. Virtually, all of the previous work on the implementation of instruction scheduling concentrated on scheduling within basic blocks (see references R5, R6 and R7 above).

Even for basic RISC architectures, however, such a restricted type of scheduling may result in code with many NOPs for a large family of programs including many Unix-type (Unix is a trademark of Unix System Laboratories Inc.) programs that include many small basic blocks terminated in unpredictable

2

branches. For scientific programs, where basic blocks tend to be larger, these problems tend not to be so severe.

Recently, a new type of architecture is evolving that extends RISC by the ability to issue more than one instruction per cycle. See, for example, the following article:

R9      R.D. Groves and R. Oehler, "An IBM second generation RISC processor architecture" published in the Proceedings of the IEEE Conference on Computer Design, (October 1989) at pages 134-137.

This type of high speed processor organisation, called superscalar or superpipelined architecture, poses more serious challenges to compilers, since instruction scheduling at the basic block level is not sufficient to allow generation of code that utilises machine resources to a desired extent; see the following article:

R10      N.P. Jouppi and D.W. Wall, "Available instruction-level parallelism for superscalar and superpipelined machines" published in the Proceedings of the Third ASPLOS Conference, (April 1989) at pages 272-282.

One recent effort to pursue instruction scheduling for superscalar machines was reported in the following article:

R11      M.C. Golumbic and V. Rainish, "Instruction Scheduling beyond Basic Blocks" published in the IBM Journal of Research and Development Vol. 34 , No 1 Jan 1990 at pages 93-97.

In this article, code replication techniques for scheduling beyond the scope of basic blocks were investigated resulting in considerable improvements of running time of the compiled code. However, the approach described still leaves room for further improvement.

One can view a superscalar processor as a VLIW machine with a small number of resources. Approaches to compiling code for VLIW machines are described in reference R8 above, and also in the following articles:

R12      J. Fisher, "Trace scheduling: A technique for global microcode compaction" published in the IEEE Transactions on Computers, C-30, No. 7 (July 1981) at pages 478-490.

R13      K. Ebcioglu, and T. Nakatani, "A new compilation technique for parallelising loops with unpredictable branches on a VLIW architecture" published in the Proceedings of the Workshop on Languages and Compilers for Parallel Computing, (August 1989), Urbana.

The object of the present invention is to provide for an instruction scheduler which is able to perform global (i.e. intra-block) scheduling in an efficient and flexible manner.

In accordance with a first aspect of the invention, there is provided an instruction scheduler for a computer comprising program dependence graph generating logic for representing data and control dependences among instructions in an input code sequence and sequencing logic which is responsive to the program dependence graph to re-order the instructions of the input code sequence, where appropriate beyond basic block boundaries, to generate an output code sequence.

The invention enables global scheduling beyond basic block boundaries to be performed by use of the program dependence graph. The instruction scheduling can be applied before or after the register allocation phase of a compiler is invoked. It is advantageous to perform the scheduling before the register allocation step, so as to leave a greater degree of flexibility for reordering the instructions.

Preferably, the program dependence graph generates a program dependence graph comprising a control dependence sub-graph and a data dependence sub-graph. The control dependence sub-graph represents the control dependences and the data dependence sub-graph represents the data dependences in the program defined by the input code sequence.

The sequencing (or scheduling) logic preferably schedules basic blocks of instructions in the input code sequence block by block using the control dependence sub-graph; the sequencing logic determining, for a block currently being scheduled, a list of candidate blocks which can contribute instructions to the current block. In addition to the blocks that are identified in the control dependence sub-graph as equivalent to the current block and are dominated by the current block, the list of candidate blocks preferably includes all the blocks which are identified in the control dependence sub-graph as immediate successors of the current block or as immediate successors of the blocks that are equivalent to the current block and are dominated by the current block.

From the data dependence graph, the sequencing logic can determine a set of candidate instructions from within the set of candidate blocks. The list of candidate instructions preferably includes all instructions, including instructions whose execution is speculative, which belong to the current block or a block in the set of candidate blocks, unless the instruction is of a type which cannot be moved beyond a block boundary and/or the instruction is of a type which cannot be scheduled speculatively. It is from this list of candidate instructions that the sequencing logic determines one or more instructions to be scheduled next from the list of candidate instructions in accordance with a machine description.

The concept of speculative instructions is addressed in the following articles:

R14    K. Ebcioglu, "Some Design Ideas for a VLIW Architecture for Sequential-Natured Software" published in the Proceedings of the IFIP Conference on Parallel Computing, (August 1989);

R15    M. D. Smith, M. S. Lam and M. A. Horowitz, "Boosting beyond Static Scheduling in a Superscalar Processor" published in the  Proceedings of the Computer Architecture Conference (May 1990) at pages 344-354.

However, in these articles it is suggested that speculative instructions have to be supported by the machine architecture, which carries a significant run time overhead. In the present invention, this disadvantage can be overcome by the use of the data gathered in the program dependence graph. The prior art does not suggest the use of the program dependence graph for instruction scheduling.

Indeed, in the present invention, the machine description is preferably stored as a parametric machine description representative of a range of computers and a set of scheduling heuristics for a specific computer. By the provision of a parametric machine description representative of a range of computers, and a set of scheduling heuristics for a specific computer, the instruction scheduler can be adapted to generate efficient code for a range of computers. By changing the set of heuristics, the scheduler can be fine tuned to specific computers within the range.

The invention also includes a computer which comprises an instruction scheduler as defined above. The computer can have a superscalar/superpipelined architecture.

In a preferred embodiment, the computer has a superscalar/superpipelined architecture.

In accordance with a second aspect of the invention there is provided a method of scheduling instructions in a computer comprising the steps of:

a) generating a program dependence graph representing data and control dependences among instructions in an input code sequence; and

b) scheduling instructions from the input code sequence using the program dependence graph so as to re-order the instructions of the input code sequence, where appropriate beyond basic block boundaries, to generate an output code sequence.

A particular example of the present invention will be described hereinafter with reference to tables to be found at the end of the present description and to accompanying drawings in which:

- Table 1 is an example of a program for explaining the operation of the invention;
- Table 2 is an annotated sequence of machine instructions corresponding to part of the program of Table 1;
- Table 3 illustrates the sequence of machine instructions of Table 2 following a first scheduling operation;
- Table 4 illustrates the sequence of machine instructions of Table 2 following an alternative scheduling operation;
- Figure 1 is a schematic block diagram providing an overview of an instruction scheduler in accordance with the invention;
- Figure 2 is a control flow graph for the sequence of machine instructions of Table 2;
- Figure 3 is a control dependence sub-graph of a program dependence graph for the sequence of instructions of Table 2; and
- Figure 4 is a flow diagram representative of instruction sequencing logic in the instruction scheduler of Figure 1.

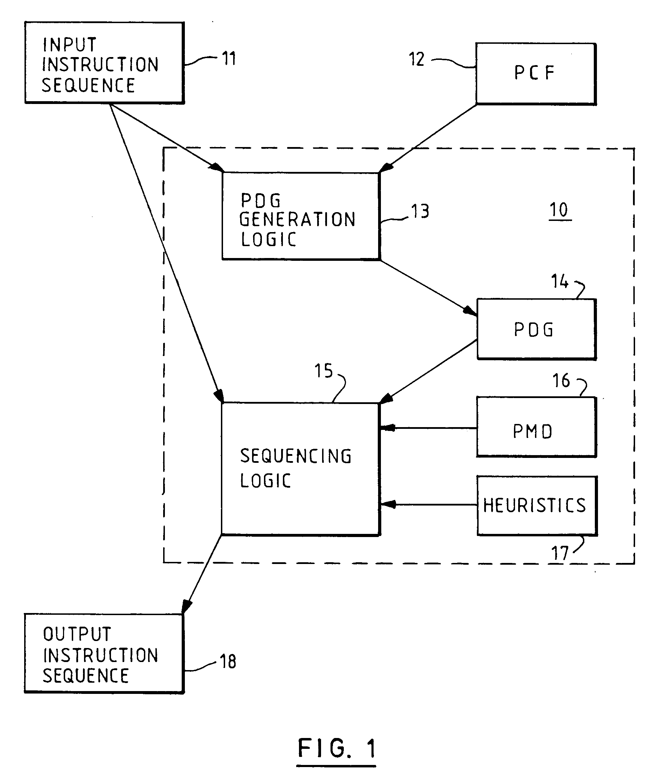

Figure 1 is a schematic block diagram providing an overview of an instruction scheduler 10 in accordance with the invention. The instruction scheduler takes as its input 11 a sequence of instructions and a control flow graph 12 for the sequence of instructions and provides as its output a rescheduled sequence of instructions 18. The instruction scheduler 10 comprises Program Dependence Graph Generation Logic 13 for generating a Program Dependence Graph (PDG) 14 and sequencing logic (or scheduling logic) 15, which uses the PDG, along with a Parametric Machine Description (PMD) 16 and a set of heuristics 17 to reschedule the instructions.

In this embodiment of the invention, the program dependence graph generation logic 13 and the sequencing logic 15 form part of a compiler, specifically one of the IBM XL family of compilers for the IBM RISC System/6000 computers. In this embodiment the program dependence graph 14, parametric machine description 16 and the set of heuristics 17, as well as the input and output sequences of instructions 11,17 and the control flow graph 12, are held in the working storage of the IBM RISC System/6000 computer on which the compiler is running. For further information on the IBM RISC System/6000 computer family, reference is made to the articles published in the IBM Journal of Research and Development Vol. 34, No. 1, Jan 1990.

The instruction scheduling can be applied before or after the register allocation phase of a compiler is

4

invoked. It is advantageous to perform the instruction scheduling before the register allocation step, so as to leave a greater degree of flexibility for reordering the instructions.

There follows a description of the parametric machine description 16. The parametric machine description is based on a generic model for a superscalar machine having a typical RISC processor whose only instructions that reference memory are load and store instructions, while all the computations are done in registers. The superscalar machine can be viewed as a collection of functional units of m types, where the machine has $n_1$, $n_2$, ... ,$n_m$ units of each type. Each instruction in the code can be executed potentially by more than one unit of a specified type.

Each instruction requires an integral number of machine cycles to be executed by one of the functional units of its type. Also, there are pipelined constraints imposed on the execution of instructions which are modelled by the integer delays assigned to the data dependence edges of the program dependence graph.

Consider the following example of two instructions, $I_1$ and $I_2$ ,such that the edge ($I_1$, $I_2$) is a data dependence edge. If t (t≧1) is the execution time of $I_1$, d (d≥0) is the delay assigned to ($I_1$, $I_2$) and $I_1$ is scheduled to start at time k, then, for performance purposes, $I_2$ should be scheduled to start no earlier than k + t + d. Note, however, that if $I_2$ is scheduled (by the compiler) to start earlier than mentioned above, this would not hurt the correctness of the program, since we assume the machine implements hardware interlocks to accommodate the delays at run time. More information about the notion of delays due to pipelined constraints can be found in references R3 and R4. Note that these delays may vary from architecture to architecture.

The parametric machine description configures the generic model of a superscalar machine to fit the IBM RISC System/6000 machine. The IBM RISC System/6000 processor is modelled as follows:
- m = 3 - there are three types of functional units: fixed point, floating point and branch types.
- $n_1$ = 1, $n_2$ = 1, $n_3$ = 1 - there is a single fixed point unit, a single floating point unit and a single branch unit.
- Most of the instructions are executed in one cycle, however, there are also multi-cycle instructions, like multiplication, division, etc.
- There are three main types of delays:
  - a delay of one cycle between a load instruction and the instruction that uses its result register (delayed load);
  - a delay of one cycle between a floating point instruction and the instruction that uses its result register;
  - a delay of three cycles between a compare instruction and the branch instruction that uses the result of the compare. More precisely, usually the three cycle delay between a compare and the respective branch instruction is encountered only when the branch is taken. However here for simplicity, it is assumed that such a delay exists whether the branch is taken or not.

The operation of the program dependence graph generation logic 13 is described below using as an example, a small section of code illustrated in Table 1. The program illustrated in Table 1, which is written in the C language, computes the minimum and the maximum of an array. In this program, concentrating on the loop which is marked in Table 1, we notice that two elements of the array 'a' are fetched every iteration of the loop. Next, these elements of 'a' are compared one to another (if (u > v)), and subsequently they are compared to the maximum and minimum variables, updating the maximum and the minimum, if needed. An excerpt of the IBM RISC System/6000 pseudo-code for the loop in Table 1, that corresponds to the real code created by the XL-C compiler, is presented in Table 2.

In this example, for reasons of ease of explanation, a feature of the IBM RISC System/6000 machine was disabled, namely keeping the iteration variable of the loop in a special counter register. Keeping the iteration variable in this register allows for decrement and test it for zero in a single instruction, effectively reducing the overhead for loop control instructions.

For convenience, the instructions in the code of Table 2 are numbered from I1 to I20 and are annotated them with the corresponding statements of the program of Table 1. Also, the ten basic blocks in the code of Table 2 are marked (B1-B10) for the purposes of the future discussion.

Every instruction in the code of Table 2, except branches, requires one cycle in the fixed point unit, while the branches take one cycle in the branch unit. There is a one cycle delay between instruction I2 and I3, due to the delayed load feature of an IBM RISC System/6000 computer. Also, there is a three cycle delay between each compare instruction and the corresponding branch instruction. Taking into consideration that the fixed point unit and the branch unit run in parallel, the code executes in an estimated 20, 21 or 22 cycles, depending on whether 0, 1 or 2 updates of maximum and minimum variables (LR instructions) are done, respectively.

The program dependence graph 14 is a convenient way to summarise all the control dependences and data dependences of the instructions in the code. The program dependence graph produced by the program dependence graph generation logic 13 comprises a control dependence sub-graph representing the control dependences and a data dependence sub-graph representing the data dependences. While the concept of data dependences, that carries the basic idea of one instruction computing a data value and another instruction using this value, was employed in compilers a long time ago, the notion of control dependences was introduced quite recently. See the following article:

R16    J. Ferrante, K.J. Ottenstein, and J.D. Warren, "The program dependence graph and its use in optimisation", published in the ACM Transactions on Programming Languages and Systems, Vol. 9, No. 3 (July 1987) at pages 319-349.

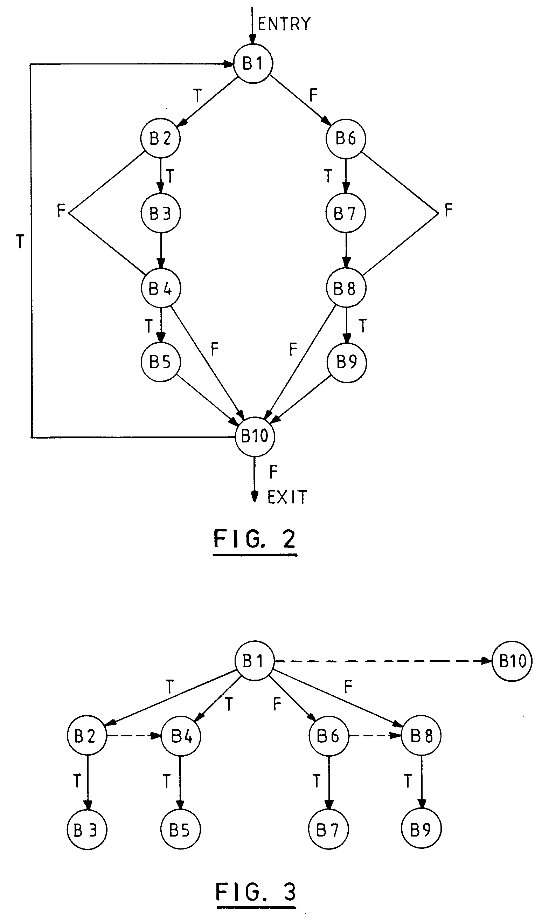

An example of a control flow graph 12 for use by the program dependence graph generation logic 13, specifically the control flow graph for the loop of Table 2, is illustrated in Figure 2. Conveniently, the control flow graph is stored in the memory of the computer on which the compiler is running in the form of a data structure having a set of linked records corresponding to the nodes in the graph, with the edges between the nodes represented by pointers between records. The control flow graph can be generated by conventional compiler logic for identifying basic blocks and loops in the code sequence and for checking the status of the various processor registers on entry into each block.

The control flow graph in Figure 2 is augmented with a unique ENTRY node and an EXIT node for convenience. In the following, it is assumed that there is a single ENTRY node in the control flow graph, but possibly several EXIT nodes. For strongly connected regions in the program (corresponding to the loops in the terminology used herein) the assumption of a single entry control flow graph corresponds to the assumption that the control flow graph is reducible.

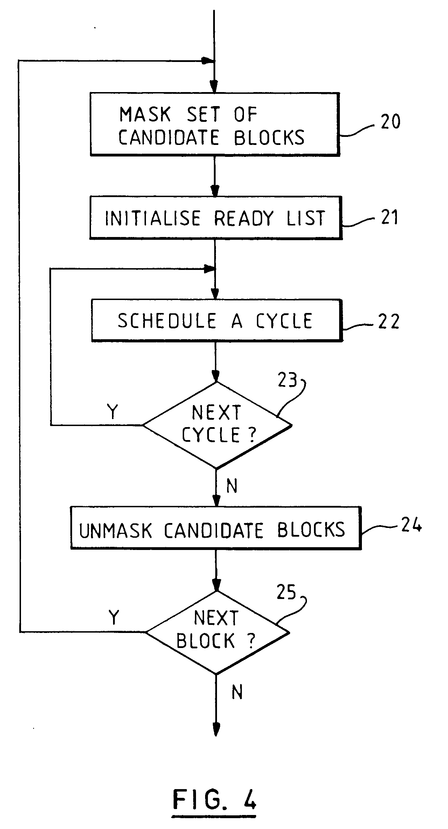

The meaning of an edge from a node X to a node Y in a control flow graph is that the control of the program may flow from the basic block X to the basic block Y. Usually the edges (i.e. the pointers in the data structure) are annotated with the conditions that control the flow of the program from one basic block to another. However, from the graph of Figure 4, it is not apparent which basic block will be executed under which condition.

The generation of a control dependence sub-graph will now be described with reference to Figure 3, which represents the control dependence sub-graph for the loop of Table 2. Conveniently, the program dependence graph generation logic 13 generates a control dependence sub-graph in the form of a data structure having a set of linked records corresponding to the nodes in the graph, with the edges between the nodes represented by pointers between records. Each node of the graph corresponds to a basic block of the program, similarly to the control flow graph of Figure 2. However, an edge from a node X to a node Y means that basic block Y will be executed under the condition computed at the end of basic block X, where the edges are again annotated with the corresponding conditions. In Figure 3 solid edges designate control dependence edges, while dashed edges will be discussed below. For example, in Figure 3 the edges emanating from B1 indicate that B2 and B4 will be executed if the condition at the end of B1 will be evaluated to TRUE, while B6 and B8 will be executed while the same condition is FALSE.

For the purposes of global scheduling, the program dependence graph generation logic only generates a forward control dependence graph. In order to generate the control dependence sub-graph, the program dependence graph generation logic first generates a post-dominator tree identifying all the postdominating relationships and from this generates the forward control dependence graph. Control dependences that result from or propagate through the back edges in the control flow graph are not generated. Thus control dependence sub-graph of Figure 3 is a forward control dependence graph. Note that forward control dependence graphs are a-cyclic.

Comparing the graphs of Figures 2 and 3, we notice that certain edges that appear in the control flow graph (like the edge from B8 to B10) are not present in the control dependence sub-graph, while there are edges in the control dependence sub-graph (like the edge from B1 to B4) that did not exist in the control flow graph in the first place. From the control dependence sub-graph of the program dependence graph, it can be seen that basic blocks that have the same set of control dependences (like B1 and B10, or B2 and B4, or B6 and B8 in Figure 3) can be executed in parallel up to the existing data dependences. This means that the instructions of such basic blocks can be scheduled together.

Some definitions (D) will now be introduced to assist in an understanding of the scheduler, where X and Y be two nodes of a control flow graph.

- D1 - X dominates Y if and only if X appears on every path from ENTRY to Y.
- D2 - X postdominates Y if and only if X appears on every path from Y to EXIT.
- D3 - X and Y are equivalent if and only if X dominates Y and Y postdominates X.
- D4 - Moving an instruction from Y to X is said to be 'useful' if and only if X is equivalent to Y.
- D5 - Moving an instruction from Y to X is said to be 'speculative' if Y does not postdominate X (i.e.

such instructions are said to be 'speculative', since their result may be used in only some of the possible executions of the program).

- D6 - Moving an instruction from Y to X is said to require duplication if X does not dominate Y.

The sequencing logic 15 employs the control dependence sub-graph for both 'useful' and 'speculative' scheduling. To find equivalent nodes, the sequencing logic searches the control dependence sub-graph data structure for nodes that are identically control dependent, i.e. they depend from the same set of nodes under the same conditions. For example, in Figure 3, B1 and B10 are equivalent, since they do not depend on any node. Also, B2 and B4 are equivalent, since both of them depend on B1 under the condition TRUE. In Figure 3 the equivalent nodes are marked with the dashed edges, the direction of these edges providing the dominance relation between the nodes. For example, for equivalent nodes B1 and B10, B1 dominates B10.

The control dependence sub-graph provides "the degree of speculativeness" for moving instructions from one block to another. When scheduling a 'speculative' instruction, there is always a gamble on the outcome of one or more branches; only when the direction of these branches is guessed correctly, does moved instruction become profitable. However, nothing is lost if the guess was wrong, it is just that nothing is gained. The control dependence sub-graph provides for every pair of nodes the number of branches gambled on (in case of 'speculative' scheduling). For example, when moving instructions from B8 to B1, a gamble is made on the outcome of a single branch, since when moving from B8 to B1 in Figure 3, only a single edge is crossed. Note that this is not apparent from the control flow graph of Figure 2. When moving from B5 to B1 there is a gamble on the outcome of two branches, since two edges of Figure 3 are crossed.

From the above, a further definition can be derived:

- D7 - Moving instructions from Y to X is said to be N-branch 'speculative' if a path exists in the control dependence sub-graph from X to Y of length N.

Given definition D7, 'useful' scheduling can be said to be 0-branch 'speculative'.

While the program dependence graph generation logic computes control dependences on the basic block level, it computes data dependences on the instruction by instruction basis. Both intrablock and interblock data dependences are computed. A data dependence may be caused by the usage of registers or by accessing memory locations.

For two instructions in the code, 'Ix' and 'Iy', a data dependence edge from Ix to Iy is inserted into the data dependence sub-graph in one of the following cases:

- a register defined in Ix is used in Iy (flow dependence);
- a register used in Ix is defined in Iy (anti-dependence);
- a register defined in Ix is defined in Iy (output dependence);
- both a and b are instructions that touch memory (loads, stores, call to subroutines) and it is impossible to prove that they address different locations.

The data dependence edges leading from a definition of a register to its use carry a (potentially non-zero) delay, which is a characteristic of the underlying machine. The rest of the data dependence edges carry zero delays.

As examples of data dependences, consider the data dependences for basic block B1 in Table 2 referencing instructions by their numbers from Table 2. There is an anti dependence from I1 to I2, since I1 uses r31 and I2 defines a new value for r31. There is a flow data dependence from both I1 and I2 to I3, since I3 uses r12 and r0 defined in I1 and I2, respectively. Edges (I1,I3) and (I2,I3) carry a one cycle delay, since both I1 and I2 are load instructions (delayed load). There is a data dependence edge from I3 to I4, since I3 sets cr7 which is used by I4. This edge has a three cycle delay, since I3 is a compare instruction and I4 is a corresponding branch instruction.

It is important to notice that, since both the control and data dependences computed are a-cyclic, the resultant program dependence graph is a-cyclic as well. This facilitates convenient scheduling of instructions by the sequencing logic.

The sequencing logic schedules instructions in the program on a loop by loop basis. It starts with the innermost loops, followed by the outer loops. There are a few principles that govern the scheduling process in general:

- Instructions are never moved out or into the loops.
- All the instructions are moved in the upward direction, i.e they are moved against the control flow edges.
- The original order of branches in the program is preserved.

Figure 4 is a flow diagram illustrating the scheduling of instructions by the sequencing logic. This is done by processing the basic blocks one at a time. The basic blocks are encountered in the topological order, i.e. if there is a path in the control flow graph from X to Y, then X is processed before Y.

If X is a basic block currently being scheduled, the sequencing logic identifies a set C(X) of candidate blocks for X, i.e. a list of basic blocks which can contribute instructions to X. The determination of which blocks are candidate blocks is done from the control dependence graph in accordance with the principles of scheduling to be applied. In the present embodiment there are two levels of scheduling:

1. Useful instructions only: here C(X) includes all the blocks that are equivalent to X and are dominated by X.
2. 1-branch 'speculative': C(X) includes the following blocks:
    a. all the blocks that are equivalent to X and are dominated by X;
    b. all the immediate successors of X in the control dependence sub-graph;
    c. all the immediate successors of blocks in "a" in the control dependence sub-graph.

After initialising (at 20) a set of candidate blocks for the current block, the sequencing logic computes (at 21) the set of candidate instructions for scheduling. Instructions which are ready for scheduling execution are held in a ready list. An instruction I is a candidate for scheduling in block X if it belongs to one of the following categories:

- I belonged to X in the first place.
- I belongs to one of the blocks in the candidate set of blocks of X and:
    1. I is 'useful' and is allowed to move beyond basic block boundaries. (There are instructions that are never moved beyond basic block boundaries, like calls to subroutines.)
    2. I is 'speculative' and I is allowed to be scheduled speculatively.

Not all instructions are allowed to be scheduled speculatively. For example, 'speculative' loads may cause exceptions due to access to a non-existing virtual memory location. The sequencing logic determines which instructions may be scheduled speculatively and what payoff is expected in this case.

The sequencing logic 15 then proceeds to schedule instructions (22) from the ready list for a given instruction cycle. During the scheduling process the sequencing logic updates the list of ready instructions, i.e. 'useful' candidate instructions whose data and control dependences were fulfilled and 'speculative' candidate instructions whose only data dependences are fulfilled. Every cycle as many instructions as required by the machine architecture are picked from the ready list to be scheduled next. If there are too many ready instructions, the "best" of them are chosen by the sequencing logic based on their priority. Once an instruction is picked up to be scheduled, it is moved to the proper place in the code, and its data and control dependence to the following instructions are marked as fulfilled, potentially enabling new instructions to become ready. This process is repeated 23 until all the instructions in block X are scheduled. Then, 25, the next block is scheduled until all the blocks in the loop are scheduled.

The relative priority of instructions for determining the instruction to be scheduled next by the sequencing logic at step 22, is derived in accordance with the set of heuristics. For example, the maximal number of delays in the path to the root of the data dependence sub-graph of the basic block to which the instruction belongs is chosen as a heuristic for fixing the priority of an instruction. However, other heuristics may be used instead or in addition to this heuristic. Table 3 illustrates an example of how global scheduling works.

Specifically, Table 3 illustrates the result of applying global scheduling to the instruction sequence of Table 2 with only so-called useful instructions being permitted to move beyond the basic block boundaries. The code illustrated in Table 3 executes in about 13 cycles per iteration of the loop.

Table 4 illustrates the result of applying global scheduling to the instruction sequence of Table 2 where it speculative scheduling is also performed (i.e. where speculative instructions are also permitted to move beyond the basic block boundaries). The code illustrated in Table 3 executes in about 12 cycles per iteration of the loop.

A scheduler for global instruction scheduling has been described which allows to move instructions well beyond basic blocks boundaries within the scope of the enclosed loop. The scheduler employs a Program Dependence Graph, which was proposed by Ferrante et. al. (see reference R14) for use in compilers to expose parallelism for the purposes of vectorisation and generation of code for multiprocessors. The scheduler uses this program dependence graph in combination with a parametric description of a family of superscalar machines to provide a powerful framework for global instruction scheduling by optimising compilers.

The scheduler uses a set of heuristics to provide a relative priority of an instruction in program dependence graph. The set of heuristic rules employed is dependent on the specific architecture of the machine for which the scheduler is intended. An example of the sort of heuristic rules relate to critical path information. The scheduler issues instructions according to their priority, trying to fully utilise machine resources, as described above. By changing the set of heuristic rules, the scheduler is fine tuned to a selected machine architecture, without changing the other parts of the scheduler.

During the scheduling process instructions are allowed to move from one basic block to another up to existing control and data dependences. In this framework 'useful' instructions are allowed, meaning, only instructions whose result is used at least once during execution of the program are scheduled. Optionally, 'speculative' instructions can be moved as well within desired constraints. In this more aggressive approach to instruction scheduling, such 'speculative' instructions are moved from basic block X to basic block Y; that is, in disregard to any control dependence that exists from X to Y. If a 'speculative' instruction is moved to a place where it will be executed by otherwise idle functional unit, then such a transformation can only improve the running time of the program and is considered profitable.

```
/* find the largest and the smallest number in a given array */
main() {
static a[] = {
5,5,5,2,5,5,5,5,5,5,5,5,5,5,5,5,5,5,
5,5,5,5,5,5,5,5,5,5,5,5,5,5,5,5,9,
};
int i,u,v,min,max, n=sizeof(a)/sizeof(a[0]);
min=a[0]; max=min; i=1;
/****************** LOOP STARTS ********************************/
while (i < n) {
    u=a[i]; v=a[i+1];
    if (u>v) {
            if (u>max) max=u;
            if (v<min) min=v;
    }
    else  {
            if (v>max) max=v;
            if (u<min) min=u;
    }
    i= i+2;
}
/****************** LOOP ENDS **********************************/
printf("min=%d max=%d\n",min,max);
}
```

TABLE 1

```
    ... more instructions here ...
******************** LOOP STARTS ***************************
    CL.0:
(I1)      L       r12=a(r31,4)            load u
(I2)      LU      r0,r31=a(r31,8)         load v
(I3)      C       cr7=r12,r0              u > v
(I4)      BF      CL.4,cr7,0x2/gt
------------------------------------------------- END BL1
(I5)      C       cr6=r12,r30             u > max
(I6)      BF      CL.6,cr6,0x2/gt
------------------------------------------------- END BL2
(I7)      LR      r30=r12                 max = u
------------------------------------------------- END BL3
    CL.6:
(I8)      C       cr7=r0,r28              v < min
(I9)      BF      CL.9,cr7,0x1/lt
------------------------------------------------- END BL4
(I10)     LR      r28=r0                  min = v
(I11)     B       CL.9
------------------------------------------------- END BL5
    CL.4:
(I12)     C       cr6=r0,r30              v > max
(I13)     BF      CL.11,cr6,0x2/gt
------------------------------------------------- END BL6
(I14)     LR      r30=r0                  max = v
------------------------------------------------- END BL7
    CL.11:
(I15)     C       cr7=r12,r28             u < min
(I16)     BF      CL.9,cr7,0x1/lt
------------------------------------------------- END BL8
(I17)     LR      r28=r12                 min = u
------------------------------------------------- END BL9
    CL.9:
(I18)     AI      r29=r29,2               i = i+2
(I19)     C       cr4=r29,171             i < n
(I20)     BT      CL.0,cr4,0x1/lt
------------------------------------------------- END BL10
******************** LOOP ENDS ***************************
    ... more instructions here ...
```

TABLE 2

```
      ...  more instructions here ...
      ******************* LOOP STARTS *****************************
          CL.0:
      (I1)      L          r12=a(r31,4)
      (I2)      LU         r0,r31=a(r31,8)
      (I18)     AI         r29=r29,2
      (I3)      C          cr7=r12,r0
      (I19)     C          cr4=r29,171
      (I4)      BF         CL.4,cr7,0x2/gt
      (I5)      C          cr6=r12,r30
      (I8)      C          cr7=r0,r28
      (I6)      BF         CL.6,cr6,0x2/gt
      (I7)      LR         r30=r12
          CL.6:
      (I9)      BF         CL.9,cr7,0x1/lt
      (I10)     LR         r28=r0
      (I11)     B          CL.9
          CL.4:
      (I12)     C          cr6=r0,r30
      (I15)     C          cr7=r12,r28
      (I13)     BF         CL.11,cr6,0x2/gt
      (I14)     LR         r30=r0
          CL.11:
      (I16)     BF         CL.9,cr7,0x1/lt
      (I17)     LR         r28=r12
          CL.9:
      (I20)     BT         CL.0,cr4,0x1/lt
      ******************* LOOP ENDS ******************************
      ...  more instructions here ...
```

TABLE  3

```
            ... more instructions here ...
************************ LOOP STARTS **********************************
            CL.0:
(I1)       L          r12=a(r31,4)
(I2)       LU         r0,r31=a(r31,8)
(I18)      AI         r29=r29,2
(I3)       C          cr7=r12,r0
(I19)      C          cr4=r29,171
(I5)       C          cr6=r12,r30
(I12)      C          cr5=r0,r30
(I4)       BF         CL.4,cr7,0x2/gt
(I8)       C          cr7=r0,r28
(I6)       BF         CL.6,cr6,0x2/gt
(I7)       LR         r30=r12
            CL.6:
(I9)       BF         CL.9,cr7,0x1/lt
(I10)      LR         r28=r0
(I11)      B          CL.9
            CL.4:
(I15)      C          cr7=r12,r28
(I13)      BF         CL.11,cr5,0x2/gt
(I14)      LR         r30=r0
            CL.11:
(I16)      BF         CL.9,cr7,0x1/lt
(I17)      LR         r28=r12
            CL.9:
(I20)      BT         CL.0,cr4,0x1/lt
********************* LOOP ENDS **************************************
            ... more instructions here ...
```

TABLE 4

## Claims

1.  Instruction scheduler for a computer comprising:

    program dependence graph generating logic for generating a program dependence graph representing data and control dependences among instructions in an input code sequence;

    sequencing logic which is responsive to the program dependence graph to re-order the instructions of the input code sequence, where appropriate beyond basic block boundaries, to generate an output code sequence.

2.  An instruction scheduler as claimed in claim 1 wherein the program dependence graph generating logic generates a program dependence graph comprising a control dependence sub-graph and a data dependence sub-graph.

12

3. An instruction scheduler as claimed in claim 2 wherein the sequencing logic schedules basic blocks of instructions in the input code sequence block by block using the control dependence sub-graph, the sequencing logic determining, for a block currently being scheduled, a list of candidate blocks which can contribute instructions to the current block.

4. An instruction scheduler as claimed in claim 3 wherein the list of candidate blocks includes all the blocks that are identified in the control dependence sub-graph as equivalent to the current block and are dominated by the current block.

5. An instruction scheduler as claimed in claim 4 wherein the list of candidate blocks additionally includes all the blocks which are identified in the control dependence sub-graph as immediate successors of the current block or as immediate successors of the blocks that are equivalent to the current block and are dominated by the current block.

6. An instruction scheduler as claimed in any one of claims 3 to 5 wherein the sequencing logic additionally determines, using the data dependence graph, a set of candidate instructions from within the set of candidate blocks.

7. An instruction scheduler as claimed in claim 6 wherein the list of candidate instructions comprises all instructions, including instructions whose execution is speculative, which belong to the current block or a block in the set of candidate blocks, unless the instruction is of a type which cannot be moved beyond a block boundary and/or the instruction is of a type which cannot be scheduled speculatively.

8. An instruction scheduler as claimed in claim 6 or claim 7 wherein the sequencing logic determines one or more instructions to be scheduled next from the list of candidate instructions in accordance with a machine description.

9. An instruction scheduler as claimed in any preceding claim comprising means for storing a machine description comprising a parametric machine description representative of a range of computers and a set of scheduling heuristics for a specific computer.

10. A computer comprising an instruction scheduler as claimed in any preceding claim.

11. A computer as claimed in claim 10 wherein the computer has a superscalar/superpipelined architecture.

12. A method of scheduling instructions in a computer comprising the steps of:
    a) generating a program dependence graph representing data and control dependences among instructions in an input code sequence; and
    b) scheduling instructions from the input code sequence using the program dependence graph so as to re-order the instructions of the input code sequence, where appropriate beyond basic block boundaries, to generate an output code sequence.

13. A method as claimed in claim 12 wherein the program dependence graph generated in step (a) comprises a control dependence sub-graph and a data dependence sub-graph.

14. A method as claimed in claim 13 wherein, in step (b) basic blocks of instructions in the input code sequence are scheduled block by block using the control dependence sub-graph, and wherein step (b) comprises, for each block as it is being scheduled, the sub-step of
    b)(i) determining a list of candidate blocks which can contribute instructions to the current block.

15. A method as claimed in claim 14, wherein the list of candidate blocks includes all the blocks that are identified in the control dependence sub-graph as equivalent to the current block and are dominated by the current block.

16. A method as claimed in claim 15 wherein the list of candidate blocks additionally includes all the blocks which are identified in the control dependence sub-graph as immediate successors of the current block or as immediate successors of the blocks that are equivalent to the current block and are dominated by the current block.

17. A method as claimed in any one of claims 14 to 16 comprising the sub-step of
    b)(ii) determining, using the data dependence graph, a set of
candidate instructions from within the set of candidate blocks.

18. A method as claimed in claim 17 wherein the list of candidate instructions includes all instructions, including instructions whose execution is speculative, which belong to the current block or a block in the set of candidate blocks, unless the instruction is of a type which cannot be moved beyond a block boundary and/or the instruction is of a type which cannot be scheduled speculatively.

19. A method as claimed in claim 17 or claim 18 comprising a sub-step of:
    b)(iii) determining one or more instructions to be scheduled next from
the list of candidate instructions in accordance with a machine description.

20. A method as claimed in claim 19 wherein the machine description comprises a parametric machine description representative of a range of computers and a set of scheduling heuristics for a specific computer.

FIG. 1

FIG. 2

FIG. 3

MASK SET OF
CANDIDATE BLOCKS — 20

INITIALISE READY LIST — 21

SCHEDULE A CYCLE — 22

NEXT CYCLE ? 23

Y

N

UNMASK CANDIDATE BLOCKS — 24

NEXT BLOCK ? 25

Y

N

FIG. 4